# EUROPÄISCHE PATENTSCHRIFT

(11) **EP 3 733 336 B1**
(45) Veröffentlichungstag und Bekanntmachung des Hinweises auf die Patenterteilung: **17.05.2023**
(21) Anmeldenummer: 20171378.1
(22) Anmeldetag: 24.04.2020
(51) Int. Cl.: B23D 59/00, B27B 5/29, B27B 27/10

(54) **KLEMMHALTER**
CLAMPING HOLDER
SUPPORT DE SERRAGE

(30) Priorität: 29.04.2019 DE 102019110984
(43) Veröffentlichungstag der Anmeldung: 04.11.2020
(73) Patentinhaber: Mafell AG, 78727 Oberndorf a.N. (DE)
(72) Erfinder: LUNZE, Stefan, 78727 Oberndorf am Neckar (DE); GÜHRING, Samuel, 72250 Freudenstadt (DE)
(74) Vertreter: Manitz Finsterwald Patent- und Rechtsanwaltspartnerschaft mbB

(56) Entgegenhaltungen:
- WO-A1-2014/182203
- DE-A1- 3 149 215
- US-A- 4 206 910
- US-A1- 2002 108 480
- US-A1- 2006 248 998
- US-A1- 2013 174 705

## Beschreibung

Die vorliegende Erfindung betrifft einen Klemmhalter zum bedarfsweisen Anbringen eines Funktionsteils an einer Bearbeitungsmaschine, mit einer Klemmeinrichtung und einem Halteabschnitt, der zur Verbindung mit dem Funktionsteil ausgebildet oder fest mit diesem verbunden ist.

Um das Arbeiten mit Tischkreissägen, Fräsmaschinen und ähnlichen Bearbeitungsmaschinen zu erleichtern, können bedarfsweise einzusetzende Funktionsteile wie zum Beispiel Anschlag- und/oder Auflageelemente bereitgestellt werden. Klemmhalter der eingangs genannten Art dienen üblicherweise dazu, derartige Funktionsteile an der Maschine anzubringen und nach dem Gebrauch wieder abzunehmen.

Die Klemmeinrichtungen herkömmlicher Klemmhalter weisen häufig eine Klemmschraube auf, durch deren Festdrehen der Klemmeingriff herbeizuführen ist. Derartige Klemmhalter weisen lediglich eine begrenzte Stabilität auf. Insbesondere bei einer Verwendung einer Werkstückauflage als Funktionsteil muss der Klemmhalter beträchtliche Kräfte aufnehmen, was durch eine Klemmschraube häufig nur unzureichend zu bewerkstelligen ist. Es wird daher nach Möglichkeiten gesucht, die Stabilität von Klemmhaltern zu verbessern. Ein weiteres Problem besteht darin, dass Funktionsteile wie Werkstückauflagen und Anschläge häufig versetzt, also umpositioniert werden müssen. Für einen Benutzer ist es zeitaufwendig und lästig, hierfür jedes Mal eine Klemmschraube lösen und wieder festdrehen zu müssen. Es ist in Bezug auf die Handhabung von Funktionsteilen an Bearbeitungsmaschinen auch problematisch, dass Klemmeinrichtungen häufig von einer Stirnseite her auf eine Profilschiene aufzuschieben sind.

In der US 2013/0174705 A1 ist ein Anschlag für eine Tischkreissäge offenbart, der mittels einer Klammer an einer Schiene des Sägetischs verfahrbar ist, wobei durch Verschwenken eines Betätigungsbauteils zwei Federbleche aufeinander zu bewegt werden können, so dass sie einen Profilvorsprung der Schiene zwischen sich festklemmen, um so den Anschlag gegenüber der Schiene zu fixieren.

Die US 2002/0108480 A1 offenbart eine Tischkreissäge, die mittels einer Klemmvorrichtung an einer Stützschiene des Sägetischs befestigt werden kann, wobei die Klemmung über eine verschwenkbare Platte bewerkstelligt wird, die vom Nocken eines Schwenkhebels beaufschlagt wird.

In der US 4,206,910 ist eine Klemmeinrichtung zum Fixieren eines Tischkreissägen-Anschlags an einer Verfahrschiene offenbart, bei der eine verschwenkbare Klemmbacke durch einen Exzenternocken beaufschlagbar ist.

Die US 2006/0248998 A1 offenbart einen Klemmhalter zum Befestigen einer Anschlagschiene an einer Tischsäge, welcher einen schwenkbaren Nockenhebel umfasst.

Eine Vorrichtung gemäß dem Oberbegriff des Anspruchs 1 ist aus DE 31 49 215 A1 bekannt.

Es ist eine Aufgabe der Erfindung, ein zuverlässiges und einfaches Anbringen von Funktionsteilen an Bearbeitungsmaschinen sowie ein schnelles Versetzen solcher Funktionsteile zu ermöglichen.

Die Lösung der Aufgabe erfolgt durch einen Klemmhalter mit den Merkmalen des Anspruchs 1.

Erfindungsgemäß umfasst die Klemmeinrichtung wenigstens zwei Klemmbacken, die jeweilige Klemmflächen für einen klemmenden Eingriff mit einem Profilelement der Bearbeitungsmaschine aufweisen und mittels eines Betätigungselements relativ zueinander von einer Fixierstellung in Richtung einer Freigabestellung und/oder umgekehrt bewegbar sind.

Die beiden Klemmbacken sorgen für einen sicheren Halt des Klemmhalters am Profilelement. Dadurch dass die Relativbewegung der Klemmbacken mittels eines Betätigungselements herbeizuführen ist, ist die Bedienung leicht und komfortabel. Insbesondere ist es nicht erforderlich, eine Klemmschraube zu verdrehen. Die Klemmbacken können in der Freigabestellung weiter voneinander beabstandet sein als in der Fixierstellung. Das heißt es kann vorgesehen sein, dass die Klemmbacken aufeinander zu bewegbar sind, um in einen klemmenden Eingriff mit dem dazwischen befindlichen Profilelement zu gelangen. Grundsätzlich ist es auch denkbar, die nahe beieinander befindlichen Klemmbacken in eine an der Bearbeitungsmaschine vorgesehene Ausnehmung einzuführen und dann für einen klemmenden Eingriff mit Wandabschnitten der Ausnehmung auseinanderzubewegen.

Erfindungsgemäß ist wenigstens eine der Klemmbacken mittels eines Lagerbolzens, der durch eine Längsführung geführt ist verschwenkbar und verschiebbar an einem Grundkörper des Klemmhalters gelagert. Die Klemmbacke kann somit eine Kombination aus einer Schwenkbewegung und einer Verschiebebewegung ausführen, wodurch der Klemmeingriff mit dem Profilelement verbessert wird. Aufgrund des bevorzugt vorgesehenen Zusammenwirkens von Lagerbolzen und Längsführung sind die Schwenkbewegung und die Verschiebebewegung voneinander entkoppelt, so dass sie durch unterschiedliche Mechanismen herbeigeführt werden können. Dies ermöglicht einen besonders großen Verschiebeweg. Die Längsführung kann durch wenigstens ein, geradliniges oder gekrümmtes, Langloch gebildet sein, in welches der Lagerbolzen hineinreicht.

Vorzugsweise ist das Betätigungselement für eine Ein-Finger-Betätigung ausgelegt. Ein Benutzer kann in diesem Fall den Klemmhalter - gegebenenfalls mit dem Funktionsteil - halten, positionieren und durch eine Fingerbewegung die Klemmung herbeiführen oder lösen. Komplexe Handbewegungen sind nicht erforderlich. Insbesondere kann das Betätigungselement derart angeordnet und ausgestaltet sein, dass es ähnlich wie ein Pistolenabzug mit dem Zeigefinger betätigbar ist. Dies ermöglicht eine besonders komfortable Bedienung.

Die Klemmbacken können durch Drücken oder Schwenken des Betätigungselements bewegbar sein. Ein Drücken oder Schwenken eines Betätigungselements ist wesentlich schneller und einfacher zu bewerkstelligen als beispielsweise das mehrfache Drehen einer Klemmschraube.

Gemäß einer Ausführungsform der Erfindung ist das Betätigungselement ein Schwenkhebel, der an einem Grundkörper des Klemmhalters gelagert ist. Dies ermöglicht eine besonders einfache Konstruktion. Durch Wahl der Hebellänge kann außerdem der erforderliche Kraftaufwand in einfacher Weise angepasst werden. Der Halteabschnitt des Klemmhalters kann am Grundkörper ausgebildet sein.

Eine weitere Ausführungsform der Erfindung sieht vor, dass die Klemmbacken klauenartig ausgebildet sind. Dies ermöglicht einen besonders festen Halt am Profilelement. Insbesondere können die Klemmbacken zum Umgreifen des Profilelements ausgebildet sein. Die Klemmbacken können hierfür aufeinander zu weisende Klauenöffnungen aufweisen. Bevorzugt sind die Klemmflächen der Klemmbacken zumindest im Wesentlichen eben. Dies ermöglicht einen flächigen Kontakt mit ebenen Gegen-Klemmflächen des Profilelements und somit einen besonders festen Sitz des Klemmhalters.

Es kann vorgesehen sein, dass zwei einander gegenüberliegende Klemmflächen der Klemmbacken relativ zueinander geneigt sind, wenn sich die Klemmbacken in der Fixierstellung befinden. Das heißt die Klemmflächen können schräg zueinander verlaufen, um den Halt am Profilelement zu verbessern und/oder um für einen Hinterschnitt zu sorgen. Insbesondere können die Klemmflächen für ein Schwalbenschwanzprofil angepasst sein. Profilelemente mit Schwalbenschwanzprofil sind an vielen gängigen Bearbeitungsmaschinen vorhanden. Die Klemmflächen können hierbei auch dann zueinander geneigt sein, wenn sie sich nicht in der Fixierstellung befinden.

Wenigstens eine der Klemmbacken kann zumindest teilweise aus einem elastischen Material gefertigt sein. Profilelemente an Bearbeitungsmaschinen können nämlich mit beträchtlichen Toleranzen behaftet sein. Durch die Elastizität der Klemmbacken können solche Toleranzen kompensiert werden.

In das elastische Material kann wenigstens ein Verstärkungselement mit verringerter Elastizität eingebettet sein. Ein solches Verstärkungselement erhöht die Grundsteifigkeit der betreffenden Klemmbacke. Durch das Zusammenwirken des elastischen Materials und des eingebetteten Verstärkungselements können die elastischen Eigenschaften der betreffenden Klemmbacke in flexibler Weise vorgegeben werden. Das Verstärkungselement kann aus Metall, beispielsweise aus Stahl, insbesondere Federstahl, bestehen. Weiterhin kann das Verstärkungselement in das elastische Material eingegossen sein. Beispielsweise kann als Verstärkungselement ein Blech vorgesehen sein, das in eine Klemmbacke aus Gummi oder Kunststoff eingebettet ist. Alternativ oder zusätzlich kann ein Verstärkungselement vorgesehen sein, das lösbar mit der Klemmbacke verbindbar ist. Ein solches Verstärkungselement ermöglicht eine nachträgliche Anpassung der elastischen Eigenschaften der Klemmbacke. Beispielsweise können Zusatzteile aus Gummi, Kunststoff oder dergleichen vorgesehen sein, die in Ausnehmungen der Klemmbacke einsteckbar sind. Es kann ein Satz von Zusatzteilen vorgesehen sein, die unterschiedliche elastische Eigenschaften aufweisen, um so eine Anpassung der Steifigkeit der Klemmbacke durch Auswechseln von Zusatzteilen zu ermöglichen.

Bevorzugt sind die Klemmbacken durch eine Federeinrichtung in Richtung der Fixierstellung beaufschlagt. Je nach Anwendung kann es sich um eine direkte oder um eine indirekte Beaufschlagung durch die Federeinrichtung handeln. Die Klemmbacken bewegen sich durch die Federkraft automatisch in die Fixierstellung, wenn der Benutzer dem nicht entgegenwirkt. Somit kann sich der Klemmhalter zum Beispiel beim Loslassen des Betätigungselements automatisch verklemmen. Dadurch wird ein unbeabsichtigtes Lösen oder Verschieben des Klemmhalters vermieden, wie es beispielsweise während des Festschraubens mittels einer Klemmschraube vorkommen kann.

Eine weitere Ausführungsform der Erfindung sieht vor, dass die Klemmbacken durch die Vorspannkraft der Federeinrichtung lediglich bis zu einer zwischen der Freigabestellung und der Fixierstellung befindlichen Vorfixierstellung in Anlage an das Profilelement bewegbar sind, wobei durch Ausüben einer zusätzlichen Kraft auf das Betätigungselement ein Weiterbewegen der Klemmbacken von der Vorfixierstellung bis zur Fixierstellung möglich ist. Die Federeinrichtung muss bei dieser Ausgestaltung keine übermäßig hohe Vorspannkraft bereitstellen, weil die Klemmwirkung in der Vorfixierstellung nicht maximal sein muss, sondern lediglich ausreichend für eine vorübergehende Fixierung. Die endgültige Fixierung wird vom Benutzer aktiv durch Bewegen der Klemmbacken in die Fixierstellung herbeigeführt, wobei vorzugsweise ein Totpunkt zu überwinden ist, um eine unerwünschte Rückbewegung der Klemmbacken zu vermeiden.

Vorzugsweise sind die Klemmbacken relativ zueinander schwenkbar. Dies ermöglicht eine einfache Konstruktion. Zudem ist dadurch eine besonders günstige Kraftübertragung durch einen ebenfalls schwenkbaren Betätigungshebel möglich. Vorzugsweise ist eine der Klemmbacken fest an einem Grundkörper des Klemmhalters angeordnet, während die andere Klemmbacke schwenkbar an diesem Grundkörper gelagert ist. Grundsätzlich können jedoch auch beide Klemmbacken gegenüber einem Grundkörper schwenkbar sein. Vorzugsweise sind die Klemmbacken um mindestens 20° relativ zueinander schwenkbar.

Gemäß einer weiteren Ausführungsform der Erfindung ist wenigstens eine der Klemmbacken mittels einer Exzenterwelle an einem Grundkörper des Klemmhalters gelagert, wobei die Exzenterwelle mittels des Betätigungselements drehbar ist. Die Klemmbacke führt bei dieser Ausgestaltung keine reine Schwenkbewegung aus, sondern eine Kombination aus einer Schwenkbewegung und einer Verschiebebewegung. Der Klemmeingriff mit dem Profilelement wird dadurch verbessert. Das Betätigungselement kann fest mit der Exzenterwelle verbunden sein, um eine direkte Kraftübertragung zu ermöglichen.

Eine spezielle Ausgestaltung der Erfindung sieht vor, dass die Exzenterwelle um eine Basisachse drehbar am Grundkörper gelagert ist und eine zu der Basisachse versetzte Exzenterachse definiert, wobei die Klemmbacke um die Exzenterachse schwenkbar an der Exzenterwelle gelagert ist. Der Abstand zwischen der Basisachse und der Exzenterachse gibt den Hub für die kombinierte Bewegung vor. Vorzugsweise ist die Exzenterwelle mittels endseitiger Lagerbuchsen am Grundkörper gelagert. Die Exzenterwelle kann ähnlich wie eine Kurbelwelle gestaltet sein.

Die Klemmbacke kann über eine in wenigstens einer Drehrichtung wirksame Mitnehmereinrichtung mit dem Betätigungselement koppelbar sein. Diese Ausgestaltung ermöglicht ein Verschwenken des Betätigungselements gegenüber der Klemmbacke in einem vorgegebenen Schwenkbereich. Außerhalb des vorgegebenen Schwenkbereichs wird die Klemmbacke vom Betätigungselement mitgenommen und gemeinsam mit diesem geschwenkt. Die Mitnehmereinrichtung kann insbesondere durch Anschlagflächen gebildet sein, die einerseits an der Klemmbacke und andererseits am Betätigungselement vorgesehen sind. Ein Schwenken des Betätigungselements gegenüber der Klemmbacke ist insbesondere für eine wie vorstehend erwähnte Totpunktüberwindung vorgesehen.

Die verschwenkbar und verschiebbar gelagerte Klemmbacke kann durch wenigstens einen Exzenternocken beaufschlagbar sein, der mittels des Betätigungselements um eine Drehachse drehbar ist. Insbesondere verläuft die Drehachse quer zu einer - bevorzugt durch einen Lagerbolzen definierten - Schwenkachse der Klemmbacke. Mittels des Exzenternockens kann die Klemmbacke auf relativ einfache Weise verschoben und/oder verschwenkt werden. Die Beaufschlagung kann direkt oder indirekt erfolgen. Vorzugsweise ist an der verschwenkbar und verschiebbar gelagerten Klemmbacke ein Ansatz ausgebildet, insbesondere in Form einer Auskragung, welcher für eine Beaufschlagung durch den Exzenternocken vorgesehen ist.

Die verschwenkbar und verschiebbar gelagerte Klemmbacke kann auch durch wenigstens zwei unterschiedliche Exzenternocken beaufschlagbar sein, die mittels des Betätigungselements gemeinsam um die Drehachse drehbar sind. Dadurch kann die Klemmbacke je nach Ausgangsstellung und/oder Stellrichtung des Betätigungselements in unterschiedlicher Weise bewegt werden. Die beiden Exzenternocken können beispielsweise unterschiedlich groß sein. Insbesondere kann vorgesehen sein, dass der eine Exzenternocken nur bei einer Drehung des Betätigungselementes in die eine Richtung, insbesondere zum Herstellen der Fixierstellung, und der andere Exzenternocken nur bei einer Drehung des Betätigungselementes in die entgegengesetzte Richtung, insbesondere zum Herstellen der Freigabestellung, wirksam ist.

Gemäß einer speziellen Ausgestaltung ist der wenigstens eine Exzenternocken mittels einer bezüglich der Drehachse axial verschiebbaren Steuerwelle am Grundkörper gelagert, wobei die verschwenkbar und verschiebbar gelagerte Klemmbacke durch die Steuerwelle und/oder den wenigstens einen Exzenternocken beaufschlagbar ist. Somit kann mittels ein und derselben, die Steuerwelle und den wenigstens einen Exzenternocken umfassenden Baugruppe sowohl eine Schwenkbewegung als auch eine Verschiebebewegung der Klemmbacke bewirkt werden, erfindungsgemäß auch voneinander unabhängig. Die axial verschiebbare Steuerwelle kann durch eine Arretiereinrichtung in wenigstens einer axialen Stellung arretierbar sein. Dadurch kann die Klemmbacke zum Beispiel in einer Klemmstellung fixiert werden, um eine unbeabsichtigte Lockerung der Klemmeinrichtung zu vermeiden. Die Arretiereinrichtung kann ein an der Steuerwelle angebrachtes, z.B. als Vorsprung ausgebildetes Stützelement umfassen, das sich in einer axialen Richtung am Grundkörper abstützen kann.

Bevorzugt wird die Arretiereinrichtung automatisch wirksam, wenn die Steuerwelle gedreht wird, um die untere Klemmbacke mittels eines Exzenternockens in die Fixierstellung zu überführen. Einen separaten Arretiervorgang braucht der Benutzer dann nicht auszuführen.

Der Halteabschnitt kann für eine klemmende Verbindung mit dem Funktionsteil wenigstens zwei Funktionsteil-Klemmbacken umfassen, die mittels eines verschwenkbaren Spannhebels relativ zueinander von einer Fixierstellung in Richtung einer Freigabestellung und/oder umgekehrt bewegbar sind. Die Betätigung eines Spannhebels ist wesentlich leichter und komfortabler als zum Beispiel das Verdrehen einer Klemmschraube.

Vorzugsweise sind die Funktionsteil-Klemmbacken für einen Eingriff mit einem Schwalbenschwanzprofil ausgebildet.

An dem verschwenkbaren Spannhebel kann eine exzentrische Beaufschlagungsfläche ausgebildet sein, welche für eine Beaufschlagung einer beweglich an einem Grundkörper des Klemmhalters gelagerten Funktionsteil-Klemmbacke vorgesehen ist. Es kann eine direkte oder indirekte, das heißt über wenigstens ein Übertragungsteil erfolgende Beaufschlagung vorgesehen sein. Speziell kann der verschwenkbare Spannhebel einen Nocken umfassen.

Die vorliegende Erfindung betrifft auch eine Bearbeitungsmaschine, insbesondere eine Tischkreissäge, mit einem Profilelement, das einander gegenüberliegende Anlageflächen aufweist.

Erfindungsgemäß umfasst eine Bearbeitungsmaschine wenigstens einen wie vorstehend beschriebenen Klemmhalter, wobei die Klemmbacken in der Fixierstellung für einen klemmenden Eingriff mit den Anlageflächen des Profilelements positioniert sind und in der Freigabestellung von dem Profilelement abnehmbar sind. Dies ermöglicht eine einfache und komfortable Anbringung von Funktionsteilen unterschiedlicher Art an der Bearbeitungsmaschine. Vorzugsweise ist das Profilelement eine längliche Schiene.

Die Bearbeitungsmaschine ist vorzugsweise als Unterflur-Zugsäge ausgebildet. Bei einer solchen Unterflur-Zugsäge kommen die Vorteile des erfindungsgemäßen Klemmhalters besonders zur Geltung, weil hier allgemein ein besonders häufiges Umpositionieren von Anschlag- und/oder Auflageelementen erforderlich ist.

Bevorzugt sind die Klemmbacken des Klemmhalters für ein zweiseitiges, insbesondere hinterschneidendes, Umgreifen des Profilelements ausgebildet. Dies ermöglicht einen besonders sicheren Halt. Insbesondere kann das Profilelement ein Schwalbenschwanzprofil aufweisen, wobei die Klemmbacken des Klemmhalters zum Umgreifen des Schwalbenschwanzprofils ausgebildet sind.

Es ist bevorzugt, dass die Klemmbacken in der Freigabestellung derart voneinander beabstandet sind, dass ein geradliniges Abnehmen und Aufsetzen des Klemmhalters vom Profilelement in wenigstens einer Abnahme- bzw. Aufsetzrichtung ermöglicht ist. Es ist dann nicht nötig, den Klemmhalter vom Schienenanfang bzw. Schienenende her auf die Profilschiene aufzuschieben oder ihn zum Abnehmen bis zum Schienenanfang bzw. Schienenende zurückzuschieben. Dies ermöglicht insbesondere bei Anwendungen mit häufig erforderlichem Umsetzen des Funktionsteils eine wesentlich komfortablere Handhabung.

Es kann vorgesehen sein, dass das Profilelement an einer Seitenfläche, Frontfläche und/oder Rückfläche der Bearbeitungsmaschine horizontal verlaufend angeordnet ist und der Klemmhalter geradlinig, insbesondere schräg nach oben, von dem Profilelement abnehmbar und auf das Profilelement aufsetzbar ist, wenn sich die Klemmbacken in der Freigabestellung befinden. Je nach Anwendung kann ein vertikales Abnehmen und Aufsetzen, ein seitliches Abnehmen und Aufsetzen und/oder ein schräges Abnehmen und Aufsetzen ermöglicht sein. Gegebenenfalls kann ein seitliches Abnehmen und Aufsetzen unter leichtem Anheben ermöglicht sein. Ein besonderer Vorteil besteht darin, dass der Benutzer den Klemmhalter unmittelbar an der gewünschten Position auf das Profilelement aufsetzen kann.

Das heißt nachträgliche verschiebende Positionierbewegungen sind nicht erforderlich.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine perspektivische Ansicht eines gemäß einer ersten Ausführungsform der Erfindung gestalteten Klemmhalters schräg von oben.
- Fig. 2: zeigt den Klemmhalter gemäß Fig. 1 schräg von unten.
- Fig. 3: ist eine vereinfachte Seitenansicht des in Fig. 1 gezeigten Klemmhalters, der auf ein Profilelement einer Bearbeitungsmaschine aufgesetzt ist, wobei sich eine Klemmbacke des Klemmhalters in einer Freigabestellung befindet.
- Fig. 4: zeigt die Anordnung gemäß Fig. 3, wobei sich die Klemmbacke in einer Vorfixierstellung befindet.
- Fig. 5: zeigt die Anordnung gemäß Fig. 3, wobei sich die Klemmbacke in einer Fixierstellung befindet.
- Fig. 6: ist eine Schnittdarstellung der in Fig. 3 gezeigten Anordnung.
- Fig. 7: ist eine Schnittdarstellung der in Fig. 4 gezeigten Anordnung.
- Fig. 8: ist eine Schnittdarstellung der in Fig. 5 gezeigten Anordnung.
- Fig. 9: ist eine aufgeschnittene Rückansicht des in Fig. 1 gezeigten Klemmhalters.
- Fig. 10: zeigt ein Betätigungselement des in Fig. 1 gezeigten Klemmhalters, das mit einer Exzenterwelle verbunden ist.
- Fig. 11: ist eine perspektivische Ansicht eines erfindungsgemäßen Klemmhalters, an dem zwei Funktionsteil-Klemmbacken vorgesehen sind.
- Fig. 12: zeigt die Anordnung gemäß Fig. 11 mit einem durch die Funktionsteil-Klemmbacken gehaltenen Schwalbenschwanzprofil.
- Fig. 13: ist eine aufgeschnittene Darstellung der Anordnung gemäß Fig. 11.
- Fig. 14: ist eine perspektivische Ansicht eines gemäß einer zweiten Ausführungsform der Erfindung gestalteten Klemmhalters.
- Fig. 15: zeigt eine Klemmbacke, eine Steuerwelle und ein Betätigungselement des Klemmhalters gemäß Fig. 14 von der Seite.
- Fig. 16: zeigt einen Endabschnitt der Steuerwelle gemäß Fig. 15 von der Seite.
- Fig. 17: zeigt den Endabschnitt der Steuerwelle gemäß Fig. 16 von vorn.

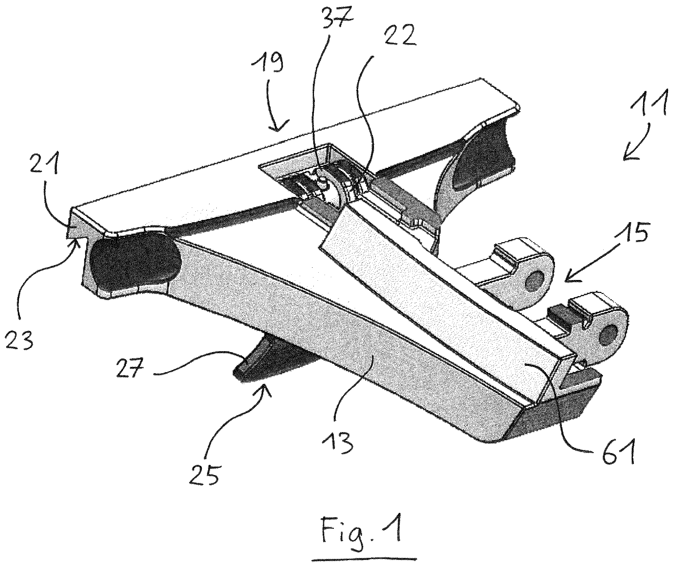

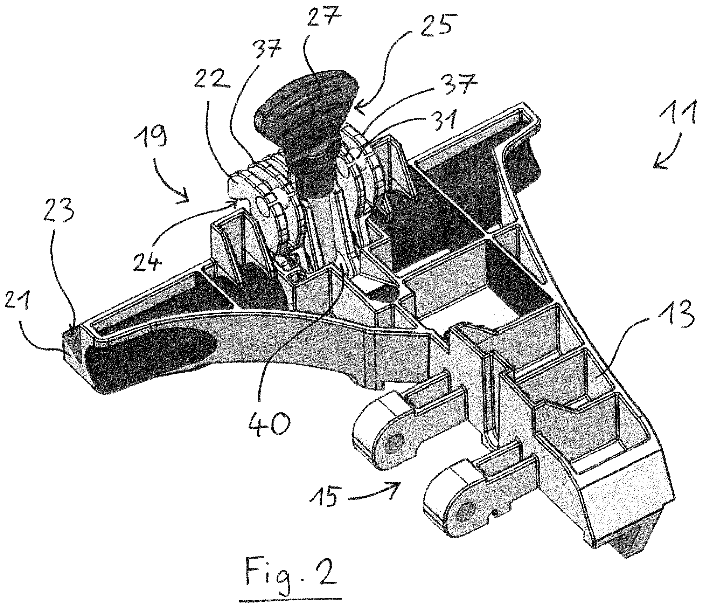

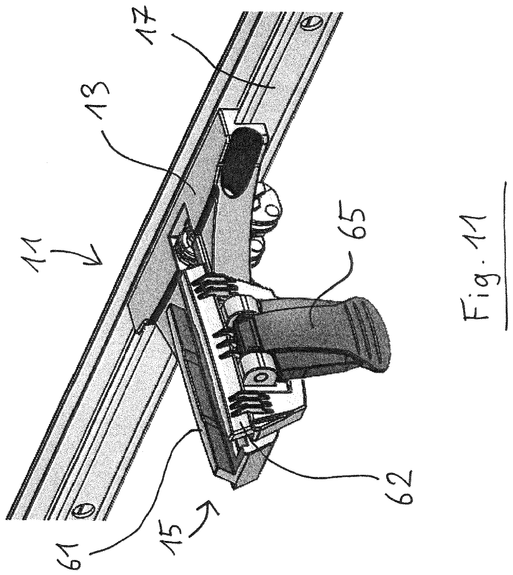

Der in Fig. 1 und 2 gezeigte, erfindungsgemäß gestaltete Klemmhalter 11 weist einen Grundkörper 13 auf, der aus Kunststoff oder aus Metall gefertigt sein kann. Der Grundkörper 13 umfasst einen in Fig. 1 und 2 lediglich teilweise dargestellten Halteabschnitt 15, der dazu dient, ein für eine Bearbeitungsmaschine vorgesehenes, in den Figuren nicht gezeigtes Funktionsteil wie zum Beispiel eine Auszugstange, ein Anschlaglineal oder ein Auflageblech mit dem Klemmhalter 11 zu verbinden. Beispielsweise kann der Halteabschnitt 15 für eine klemmende Verbindung mit dem Funktionsteil ausgelegt sein, wie nachfolgend unter Bezugnahme auf die Fig. 11-13 noch näher ausgeführt wird. Grundsätzlich könnte der Klemmhalter 11 auch fest mit einem Funktionsteil verbunden sein.

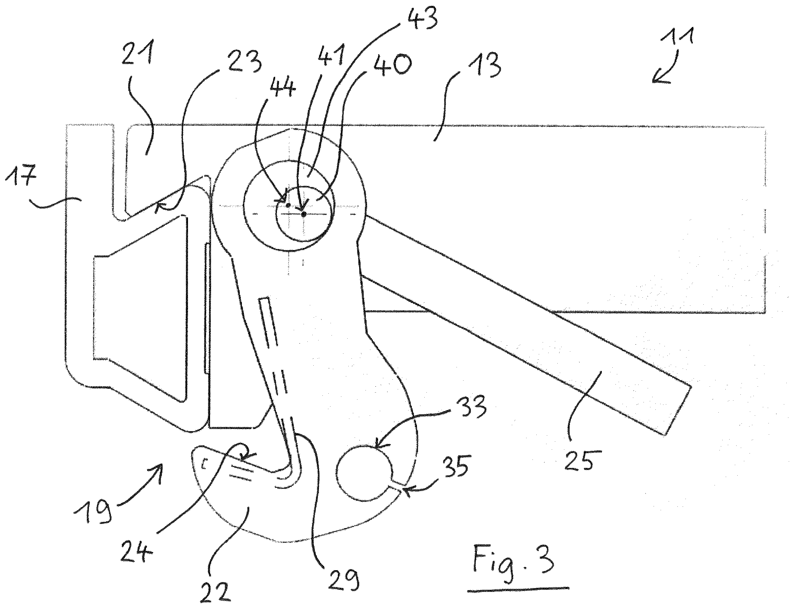

Um den Klemmhalter 11 an einem wie in Fig. 3 gezeigten Profilelement 17 einer Bearbeitungsmaschine befestigen zu können, ist er mit einer betätigbaren Klemmeinrichtung 19 ausgestattet. Diese weist zwei Klemmbacken 21, 22 auf, die jeweilige Klemmflächen 23, 24 für einen klemmenden Eingriff mit dem Profilelement 17 aufweisen. Bei dem dargestellten Ausführungsbeispiel ist die im Bild obere Klemmbacke 21 einstückig mit dem Grundkörper 13 ausgebildet, während die im Bild untere Klemmbacke 22 beweglich am Grundkörper 13 gelagert ist.

Mittels eines an dem Grundkörper 13 gelagerten Schwenkhebels 25 kann die untere Klemmbacke 22 zwischen einer Freigabestellung und einer Fixierstellung verstellt werden, wie nachfolgend unter Bezugnahme auf die Fig. 3 bis 8 näher ausgeführt wird. Der Schwenkhebel 25 ist für eine Ein-Finger-Betätigung ausgelegt und hierfür mit einem abgeplatteten Endstück 27 versehen, das in den Fig. 3 bis 5 weggelassen ist.

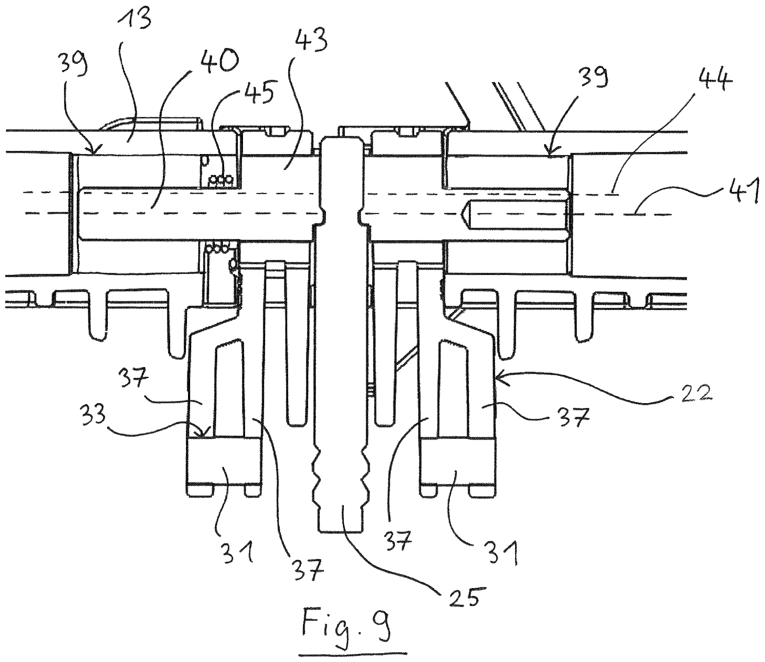

Die untere Klemmbacke 22 ist klauenartig geformt und aus einem elastischen Material wie zum Beispiel Kunststoff oder Gummi gefertigt. In Fig. 3 ist erkennbar, dass ein Verstärkungselement 29, hier in Form eines abgewinkelten gelochten Stahlblechs, in das elastische Material eingebettet ist. Zur weiteren Anpassung der Elastizität der unteren Klemmbacke 22 sind wie in Fig. 9 dargestellt zylindrische Versteifungsteile 31 aus Kunststoff oder Gummi vorgesehen, die in Ausnehmungen 33 der unteren Klemmbacke 22 eingesteckt sind. Durch Ersetzen der Versteifungsteile 31 durch andersartige Versteifungsteile ist das elastische Verhalten der unteren Klemmbacke 22 beeinflussbar. Zur weiteren Anpassung der Elastizität der unteren Klemmbacke 22 sowie zum Erleichtern des Einsteckens und Abnehmens der Versteifungsteile 31 sind die Ausnehmungen 33 über Schlitze 35 geöffnet. Wie in Fig. 2 erkennbar weist die untere Klemmbacke 22 vier parallele Plattenabschnitte 37 auf, durch deren vordere Schmalseiten insgesamt die Klemmfläche 24 gebildet ist.

Die Lagerung der unteren Klemmbacke 22 am Grundkörper 13 ist in Fig. 9 näher dargestellt. Mittels zweier Lagerbuchsen 39 ist eine Exzenterwelle 40 um eine Basisachse 41 schwenkbar am Grundkörper 13 gelagert. Der Schwenkhebel 25 ist fest mit der Exzenterwelle 40 verbunden. Im Mittelteil der Exzenterwelle 40 befindet sich ein Lagerabschnitt 43, an dem die untere Klemmbacke 22 drehbar gelagert ist. Der Lagerabschnitt 43 definiert eine Exzenterachse 44, die gegenüber der Basisachse 41 versetzt ist. Die untere Klemmbacke 22 ist also um die Exzenterachse 44 gegenüber der Exzenterwelle 40 schwenkbar. Bei einem Drehen der Exzenterwelle 40 um die Basisachse 41 bewegt sich die Exzenterachse 44 auf einer Kreisbahn. Demgemäß bewegt sich die untere Klemmbacke 22 ähnlich wie eine Pleuelstange, wenn die Exzenterwelle 40 gedreht wird.

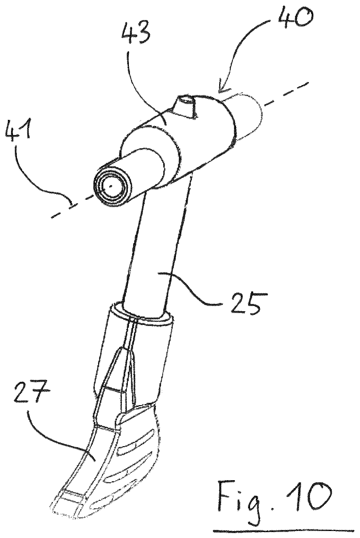

In Fig. 9 ist auch erkennbar, dass eine Torsionsfeder 45 auf der Exzenterwelle 40 sitzt. Diese stützt sich einerseits am Grundkörper 13 und andererseits an der unteren Klemmbacke 22 ab und sorgt für eine Vorspannung der unteren Klemmbacke 22 in Richtung der oberen Klemmbacke 21 (Fig. 1). Die Gestaltung der Exzenterwelle 40 sowie deren Verbindung mit dem Schwenkhebel 25 ist in Fig. 10 genauer dargestellt.

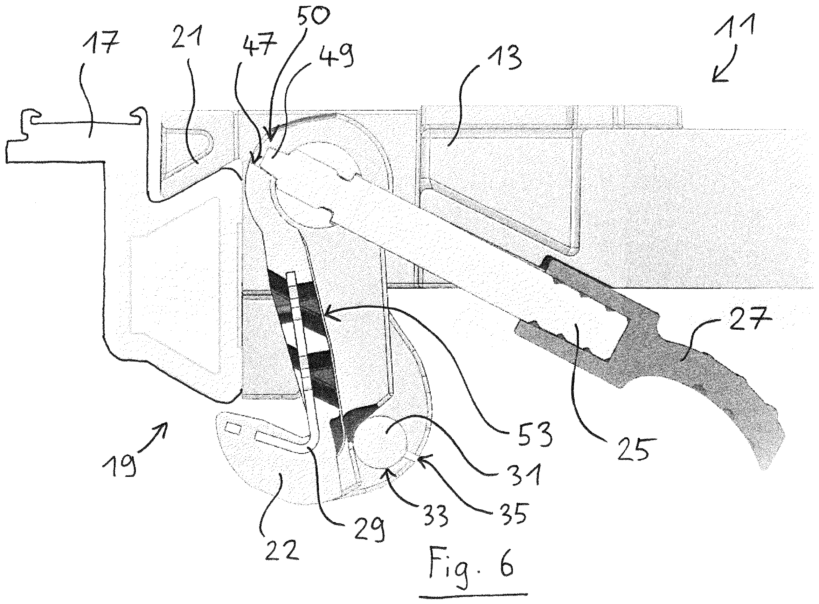

Die Funktionsweise der Klemmeinrichtung 19 wird nachfolgend unter Bezugnahme auf die Fig. 3 bis 8 erläutert. Die Fig. 3 und 6 zeigen die untere Klemmbacke 22 in einer Freigabestellung, in welcher sie derart von der oberen Klemmbacke 21 beabstandet ist, dass der Klemmhalter 11 schräg von oben auf das Profilelement 17 aufsetzbar ist. Ein Benutzer ergreift hierzu den Grundkörper 13 und drückt mit dem Zeigefinger den Schwenkhebel 25 zu sich, schwenkt also den Schwenkhebel 25 gemäß Fig. 3 bis 8 entgegen dem Uhrzeigersinn. Da die untere Klemmbacke 22 schwenkbar auf der Exzenterwelle 40 sitzt, ist sie nicht fest mit dem Schwenkhebel 25 gekoppelt. Eine an der unteren Klemmbacke 22 ausgebildete Anschlagfläche 47 (Fig. 6) bildet in Verbindung mit einem Fortsatz 49 des Schwenkhebels 25 jedoch eine Mitnehmereinrichtung 50, welche eine Kopplung des Schwenkhebels 25 mit der unteren Klemmbacke 22 bewirkt, sobald der Erweiterungsfortsatz 49 an der Anschlagfläche 47 anschlägt. Aufgrund der Mitnehmereinrichtung 50 kann der Benutzer also mittels des Schwenkhebels 25 unter Überwindung der Kraft der Torsionsfeder 45 die untere Klemmbacke 22 in die in Fig. 3 und 6 dargestellte Freigabestellung bewegen.

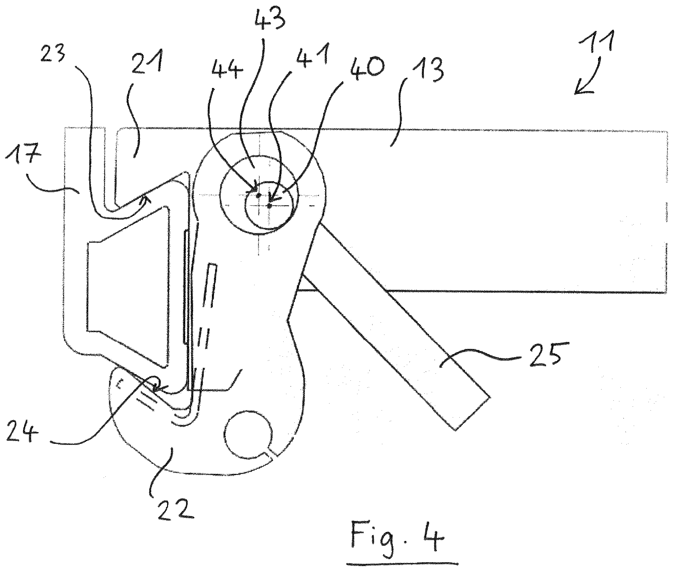

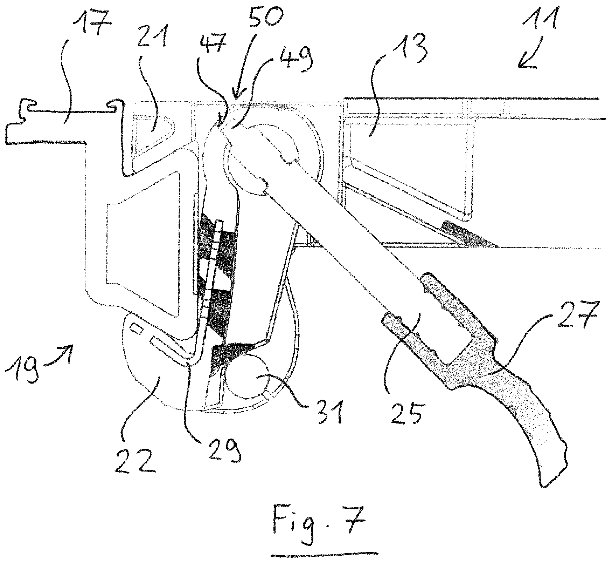

Sobald der Klemmhalter 11 an der gewünschten Position auf das Profilelement 17 aufgesetzt ist, lässt der Benutzer den Schwenkhebel 25 los. Aufgrund der Kraft der Torsionsfeder 45 bewegt sich die untere Klemmbacke 22 auf das Profilelement 17 zu, bis es wie in Fig. 4 und 7 gezeigt an diesem anschlägt. Diese Stellung der unteren Klemmbacke 22 wird als Vorfixierstellung bezeichnet. Der Schwenkhebel 25 wird hierbei von der unteren Klemmbacke 22 mitgenommen, das heißt im Uhrzeigersinn geschwenkt. Das Profilelement 17 ist in der Vorfixierstellung von den beiden Klemmbacken 21, 22 umschlossen, sodass der Klemmhalter 11 bereits am Profilelement 17 gehalten ist und nicht herabfallen kann. Die Exzenterachse 44 befindet sich unterhalb ihres oberen Totpunkts.

Ausgehend von der in Fig. 4 und 7 gezeigten Vorfixierstellung kann der Schwenkhebel 25 vom Benutzer weiter im Uhrzeigersinn geschwenkt werden. Da die Mitnehmereinrichtung 50 in dieser Richtung nicht wirksam ist, bewegt sich die untere Klemmbacke 22 nicht mit dem Schwenkhebel 25 mit. Vielmehr wird sie aufgrund der Kreisbewegung der Exzenterachse 44 um die feste Basisachse 41 angehoben und geringfügig seitlich versetzt, so dass sich die Klemmflächen 23, 24 aufeinander zu bewegen. Dabei verformt sich die elastische untere Klemmbacke 22, da sie am Profilelement 17 anliegt.

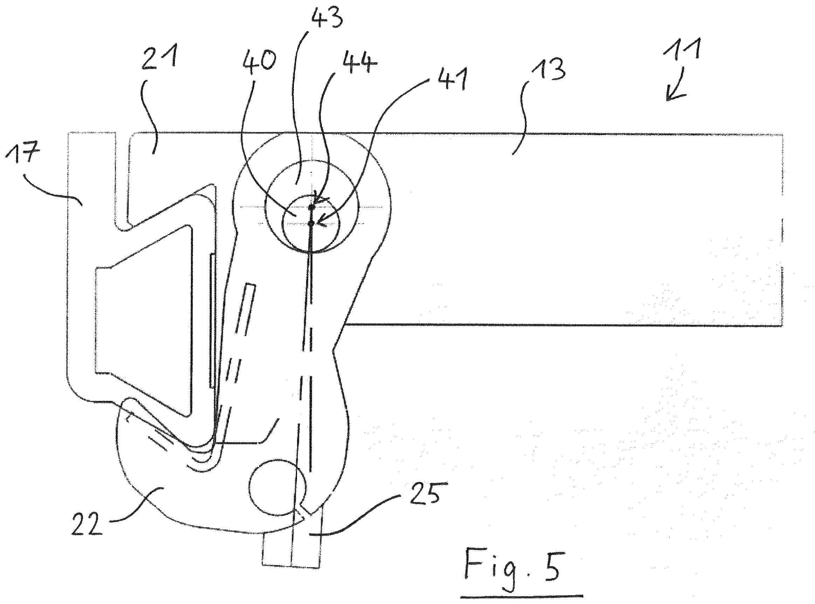

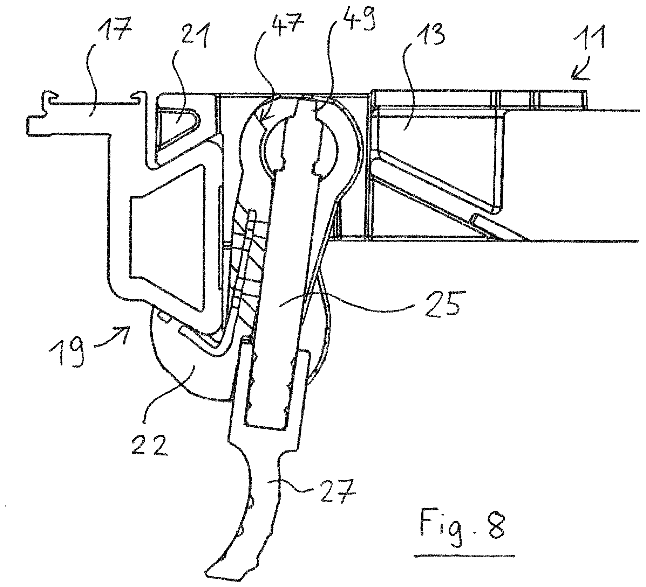

Der Schwenkhebel 25 kann so lange im Uhrzeigersinn weitergeschwenkt werden, bis die Exzenterachse 44 den oberen Totpunkt überwunden hat. Erst nach Überwindung des oberen Totpunkts gelangt der Schwenkhebel 25 in Kontakt mit einer Begrenzungsfläche 53 der unteren Klemmbacke 22, sodass ein weiteres Verschwenken des Schwenkhebels 25 im Uhrzeigersinn blockiert ist. Die untere Klemmbacke 22 hat die Fixierstellung erreicht, in welcher ein stabiler Klemmeingriff der Klemmeinrichtung 19 mit dem Profilelement 17 vorliegt. Dieser Zustand ist in den Fig. 5 und 8 gezeigt. Zur Verdeutlichung des Ausmaßes an Verformung ist in Fig. 5 die untere Klemmbacke 22 in einem unverformten Zustand in Überschneidung mit dem Profilelement 17 gezeigt. Es versteht sich, dass der untere Bereich der unteren Klemmbacke 22 in der Realität bündig mit den Außenflächen des Profilelements 17 ist. Aus dem in den Fig. 5 und 8 gezeigten Zustand kann sich die Klemmeinrichtung 19 nicht selbstständig lösen, da die Exzenterachse 44 den Totpunkt überwunden hat.

Wenn der Klemmhalter 11 ausgehend von dem in den Fig. 5 und 8 gezeigten Zustand vom Profilelement 17 abzunehmen ist, schwenkt der Benutzer den Schwenkhebel 25 mit dem Zeigefinger entgegen dem Uhrzeigersinn. Dabei schwenkt zunächst ausschließlich der Schwenkhebel 25, während der Totpunkt der Exzenterachse 44 überwunden wird und sich die untere Klemmbacke 22 absenkt. Die Verformung der unteren Klemmbacke 22 bildet sich hierbei zurück. Sobald der Fortsatz 49 des Schwenkhebels 25 an der Anschlagfläche 47 anschlägt, bewirkt ein weiteres Schwenken des Schwenkhebels 25 entgegen dem Uhrzeigersinn ein Verschwenken der unteren Klemmbacke 22 entgegen dem Uhrzeigersinn. Dabei muss der Benutzer die Vorspannkraft der Torsionsfeder 45 überwinden. Schließlich ist wieder der in Fig. 3 und 6 gezeigte Zustand erreicht.

Bei dem Profilelement 17 handelt es sich vorzugsweise um eine längliche Schiene, die wie gezeigt ein Schwalbenschwanzprofil aufweist, an einer Seitenfläche einer Tischkreissäge montiert ist und im Betriebszustand der Tischkreissäge horizontal verläuft. Der Benutzer kann den erfindungsgemäßen Klemmhalter 11 einhändig ohne Umgreifen bedienen, indem er den Grundkörper 13 von oben ergreift und den Schwenkhebel 25 mit dem Zeigefinger und gegebenenfalls mit dem Daumen betätigt. Der Klemmhalter 11 kann unmittelbar an der gewünschten Position des Profilelements 17 auf dieses aufgesetzt werden, ohne dass ein nachträgliches Verschieben erforderlich ist. Sobald der Benutzer den Schwenkhebel 25 loslässt, gelangt die untere Klemmbacke 22 in die Vorfixierstellung und sichert den Klemmhalter 11 am Profilelement 17. Der Benutzer kann den Klemmhalter 11 in diesem Zustand loslassen, ohne dass die Gefahr eines Herabfallens besteht. Für die endgültige Fixierung unter Überwindung des Totpunkts der Exzenterachse 44 kann somit auch eine freie Hand verwendet werden.

Anstelle der unteren Klemmbacke 22 könnte auch die obere Klemmbacke 21 relativ zum Grundkörper 13 schwenkbar sein. Außerdem könnten beide Klemmbacken 21, 22 elastisch ausgeführt sein. Grundsätzlich könnte anstelle des Schwenkhebels 25 auch ein Drehknopf oder dergleichen vorgesehen sein.

In den Fig. 11 bis 13 ist der erfindungsgemäße Klemmhalter 11 mit allen Komponenten des Halteabschnitts 15 gezeigt. Der Schwenkhebel 25 ist in der Fig. 11 weggelassen.

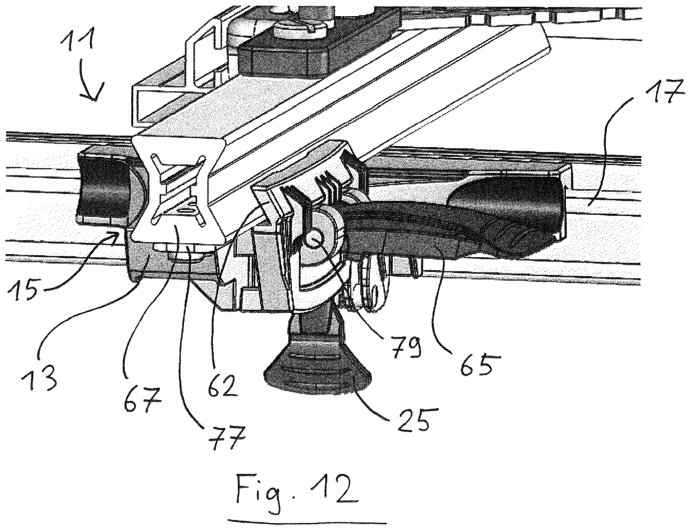

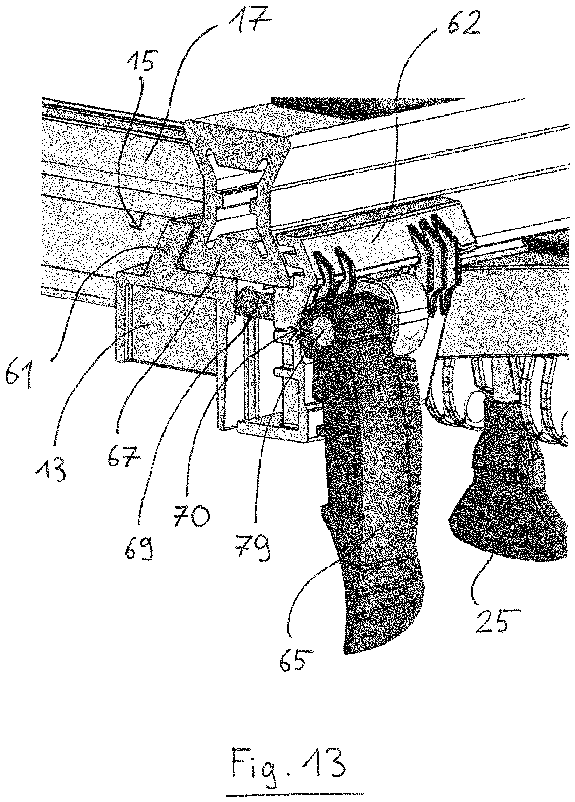

Der Halteabschnitt 15 ist für eine klemmende Verbindung mit einem schwalbenschwanzförmigen Profilelement 67 des Funktionsteils ausgelegt und hierfür mit zwei Funktionsteil-Klemmbacken 61, 62 versehen. Das Profilelement weist hier einen doppelt schwalbenschwanzförmigen Querschnitt auf. Während die im Bild linke Funktionsteil-Klemmbacke 61 einstückig mit dem Grundkörper 13 ausgebildet ist, ist die im Bild rechte Funktionsteil-Klemmbacke 62 verschiebbar an dem Grundkörper 13 gelagert. Ein in Fig. 13 erkennbares Federelement 69 spannt die verschiebbare Funktionsteil-Klemmbacke 62 von der anderen Funktionsteil-Klemmbacke 61 weg gerichtet in eine Freigabestellung vor. Mittels eines verschwenkbar am Grundkörper 13 gelagerten Spannhebels 65 kann die verschiebbare Funktionsteil-Klemmbacke 62 gegen die Kraft des Federelements 69 auf die andere Funktionsteil-Klemmbacke 61 zu bewegt werden, bis sie eine Fixierstellung erreicht hat. Wenn sich die verschiebbare Funktionsteil-Klemmbacke 62 in der Fixierstellung befindet, ist das schwalbenschwanzförmige Profilelement 67 zwischen den Funktionsteil-Klemmbacken 61, 62 eingeklemmt und somit am Klemmhalter 11 fixiert. Wenn sich die verschiebbare Funktionsteil-Klemmbacke 62 hingegen in der Freigabestellung befindet, kann das schwalbenschwanzförmige Profilelement 67 gegenüber dem Klemmhalter 11 verschoben werden. Ein vollständiges Herausziehen des Profilelements 67 aus dem Klemmhalter 11 ist durch ein in Fig. 12 erkennbares Anschlagelement 77 unterbunden, das endseitig am Profilelement 67 angeschraubt ist.

Wie insbesondere aus der Schnittansicht gemäß Fig. 13 hervorgeht, ist der Spannhebel 65 mittels eines zylindrischen Stifts 79 am Grundkörper 13 gelagert. Der im Bild obere Bereich des Spannhebels 65 ist nockenartig ausgebildet, das heißt es ist eine exzentrische Beaufschlagungsfläche 70 vorgesehen, die an der verschiebbaren Funktionsteil-Klemmbacke 62 anliegt. Bei einem Verschwenken des Spannhebels 65 ausgehend von der in Fig. 12 gezeigten Öffnungsstellung in die in Fig. 13 gezeigte Schließstellung drückt die exzentrische Beaufschlagungsfläche 70 gegen die verschiebbare Funktionsteil-Klemmbacke 62 und bewegt diese in die Fixierstellung. Durch eine gezielte Formgebung der Beaufschlagungsfläche 70 kann ein spezifischer Verlauf der Bewegung der Funktionsteil-Klemmbacke 62 vorgegeben werden. Durch eine Schwenkbewegung des Spannhebels 65 über den Totpunkt hinaus kann in ähnlicher Weise wie bei der Klemmeinrichtung 19 gemäß Fig. 5 ein unerwünschtes Lösen der Klemmung verhindert werden.

Die verschiebbare Funktionsteil-Klemmbacke 62 ist vorzugsweise aus einem elastischen Material, beispielsweise aus einem elastischen Kunststoff, gefertigt. Weiterhin ist es bevorzugt, dass die verschiebbare Funktionsteil-Klemmbacke 62 hinsichtlich ihrer Formgebung relativ zur Formgebung eines zu fixierenden Profilelements 67 eine Vorspannung aufweist. Das heißt die verschiebbare Funktionsteil-Klemmbacke 62 ist nicht mit einer exakt an das Profilelement 67 angepassten Idealform gefertigt, sondern mit einer davon abweichenden Verzugsgeometrie, welche einen Spielraum für Verformungen zulässt. Dadurch können Toleranzen des Profilelements 67 ausgeglichen werden. Innerhalb eines definierten Toleranzfeldes ist es also möglich, mittels der Funktionsteil-Klemmbacken 61, 62 Profilelemente 67 mit unterschiedlicher Materialstärke einzuklemmen. Der Spannhebel 65 kann aufgrund der Verformbarkeit der verschiebbaren Funktionsteil-Klemmbacke 62 immer über den Totpunkt hinaus bewegt werden.

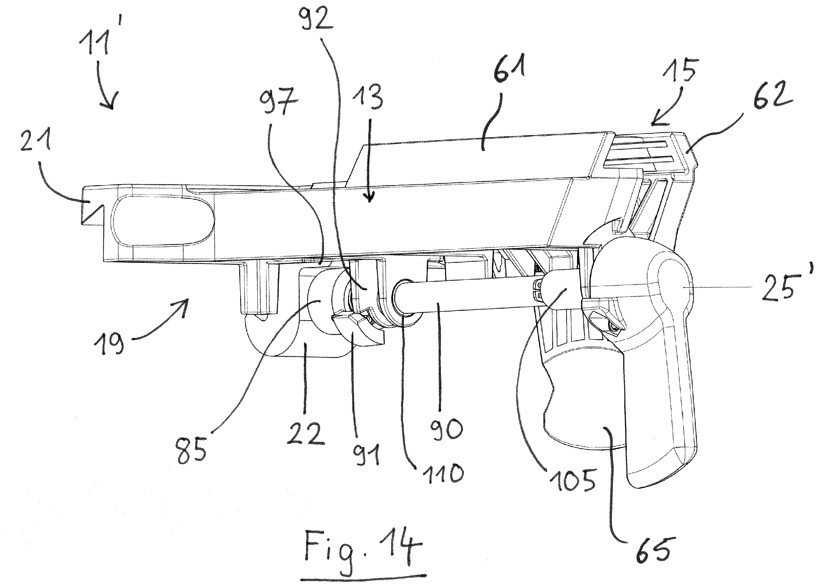

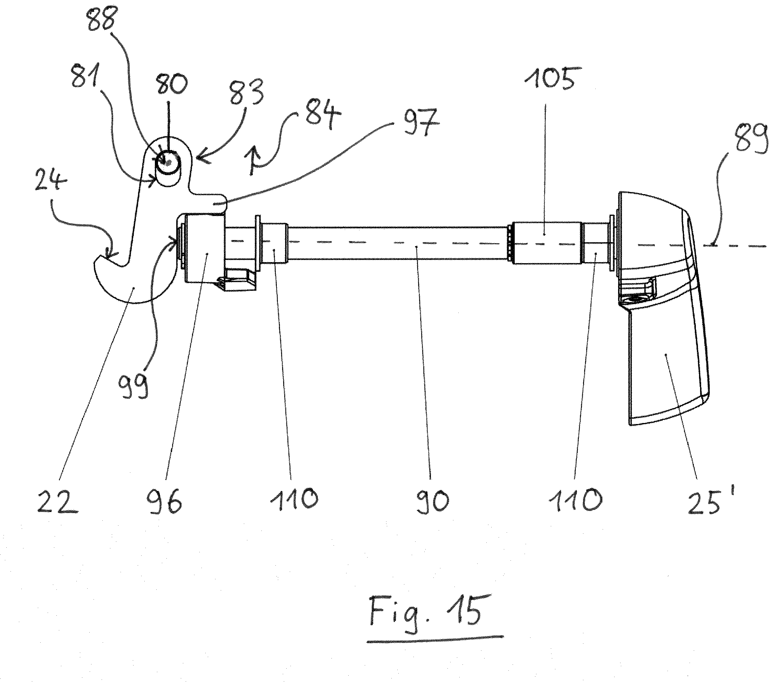

In den Fig. 14 bis 17 ist eine alternative Ausführungsform eines erfindungsgemäßen Klemmhalters 11' gezeigt. Wie bei dem vorstehend beschriebenen Ausführungsbeispiel ist die im Bild obere Klemmbacke 21 einstückig mit dem Grundkörper 13 ausgebildet, während die im Bild untere Klemmbacke 22 beweglich am Grundkörper 13 gelagert ist. Anstatt einer Exzenterwelle ist zur Lagerung jedoch ein in Fig. 15 erkennbarer Lagerbolzen 80 vorgesehen, der durch ein Langloch 81 der unteren Klemmbacke 22 hindurchreicht. Durch das Langloch 81 ist eine Längsführung 83 für den Lagerbolzen 80 gebildet, welche ein Verschieben der unteren Klemmbacke 22 relativ zum Grundkörper 13 (Fig. 14) in und entgegen einer Verschieberichtung 84 ermöglicht. Zusätzlich ist die untere Klemmbacke 22 um eine durch den Lagerbolzen 80 definierte Schwenkachse 88 verschwenkbar.

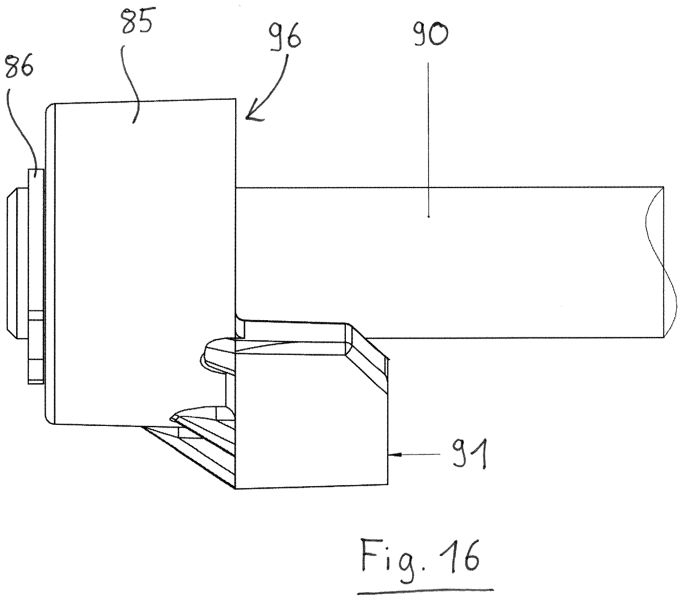

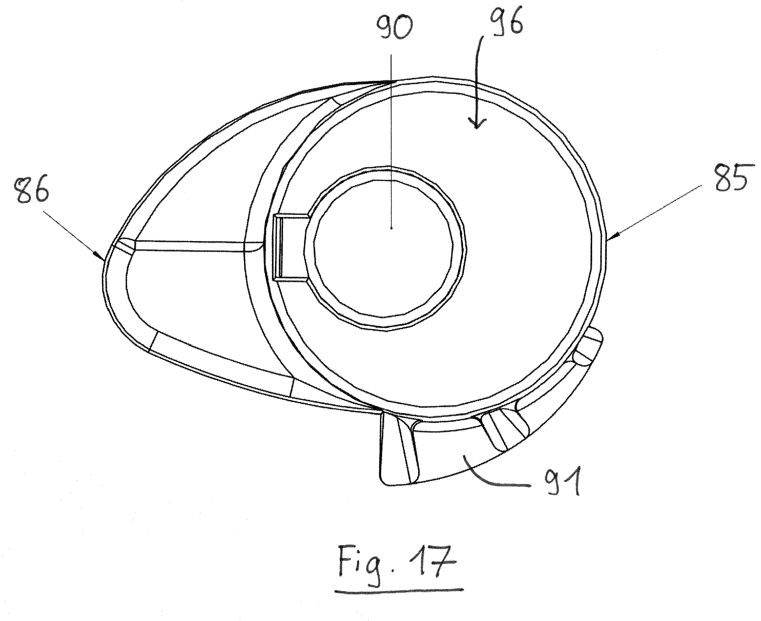

Eine Steuerwelle 90 ist mittels zweier Gleitlager 110 um eine quer zur Schwenkachse 88 und quer zur Verschieberichtung 84 verlaufende Drehachse 89 drehbar am Grundkörper 13 gelagert. Mittels eines Schwenkhebels 25' kann die Steuerwelle 90 verdreht werden. Wie in den Fig. 16 und 17 erkennbar trägt die Steuerwelle 90 ein - gegen Verschieben in axialer Richtung und gegen Verdrehen gesichertes, d.h. fest mit der Nockenwelle 90 verbundens - Nockenelement 96, das einen ersten Exzenternocken 85, einen zweiten Exzenternocken 86 und einen Stützvorsprung 91 aufweist. Die Exzenternocken 85, 86 sind in der Lage, eine Auskragung 97 (Fig. 15) der unteren Klemmbacke 22 in der Verschieberichtung 84 zu beaufschlagen. Wie in Fig. 17 zu sehen ist, definiert der erste Exzenternocken 85 einen kleineren Stellweg als der in die entgegengesetzte Richtung weisende zweite Exzenternocken 86. Eine in Fig. 15 erkennbare Druckfeder 105 sorgt dafür, dass die Steuerwelle 90 axial in Richtung der unteren Klemmbacke 22 vorgespannt ist.

Wenn sich der Schwenkhebel 25' in der in Fig. 14 und 15 gezeigten Ausgangsstellung befindet, kann sich die Steuerwelle 90 axial in einer von der unteren Klemmbacke 22 weg weisenden Richtung bewegen, weil der Stützvorsprung 91 nicht am Grundkörper 13 anliegt. Deshalb kann die untere Klemmbacke 22 unter Überwindung der Kraft der Druckfeder 105 von der oberen Klemmbacke 21 weg, also in Fig. 15 entgegen dem Uhrzeigersinn, geschwenkt werden. Die untere Klemmbacke 22 weicht also aus, wenn sie beim Aufsetzen des Klemmhalters 11' gegen das Profilelement 17 (Fig. 3) gedrückt wird. Nach dem Aufsetzen bewegt sich die untere Klemmbacke 22 aufgrund der Federkraft wieder auf die obere Klemmbacke 21 zu, so dass der Klemmhalter 11' auf dem Profilelement 17 vorfixiert ist und lediglich in seitlicher Richtung auf diesem verschoben werden kann.

Durch Drehen des Schwenkhebels 25' aus der Ausgangsstellung gemäß Fig. 14 um 90° im Uhrzeigersinn, was der Benutzer mit nur einer Hand bewerkstelligen kann, wird die Auskragung 97 der unteren Klemmbacke 22 von dem ersten Exzenternocken 85 beaufschlagt und dadurch nach oben gedrückt. Gleichzeitig gelangt der Stützvorsprung 91 in Anlage mit einem Arretierabschnitt 92 des Grundkörpers 13, so dass eine axiale Bewegung der Steuerwelle 90 weg von der unteren Klemmbacke 22 unterbunden ist. Die untere Klemmbacke 22 kann nicht in Richtung Freigabestellung schwenken, weil sie wie in Fig. 15 gezeigt an einer Stirnfläche 99 der Steuerwelle 90 anstößt. Die untere Klemmbacke 22 wird daher unter Beibehaltung der Schwenkstellung in der Verschieberichtung 84 nach oben gedrückt, bis sie die Fixierstellung erreicht hat, in welcher ein stabiler Klemmeingriff der Klemmeinrichtung 19 mit dem Profilelement 17 vorliegt. Durch das Zusammenwirken von Stützvorsprung 91 und Arretierabschnitt 92 ist die Gesamtanordnung in axialer Richtung verspannt, d.h. die Steuerwelle 90 ist sozusagen zwischen unterer Klemmbacke 22 und Arretierabschnitt 92 eingespannt, so dass sich die Fixierstellung nicht von alleine lösen kann. Eine zusätzliche Verdrehsicherung des Schwenkhebels 24' ist folglich nicht erforderlich.

Zum Lösen des Klemmhalters 11' wird der Schwenkhebel 25' entgegen den Uhrzeigersinn zunächst um 90° zurück in die Ausgangsstellung gemäß Fig. 14 und dann weiter um 90° entgegen dem Uhrzeigersinn gedreht. Dabei übt der zweite Exzenternocken 86 eine Kraft auf die Auskragung 97 aus, die ein Verschwenken der unteren Klemmbacke 22 in die Freigabestellung bewirkt. Der Stützvorsprung 91 liegt hierbei nicht am Grundkörper 13 an, so dass die Steuerwelle 90 durch die in die Freigabestellung schwenkende untere Klemmbacke 22 axial bewegt wird, und zwar gegen die Kraft der Druckfeder 105. Aufgrund der nunmehr von der oberen Klemmbacke 21 weg geschwenkten unteren Klemmbacke 22 kann der Klemmhalter 11' von dem Profilelement 17 abgenommen werden. Nach dem Abnehmen dreht sich der Schwenkhebel 25' aufgrund der Federkraft und dem Zusammenspiel von Steuerwelle 90, unterer Klemmbacke 22 und zweitem Exzenternocken 86 wieder in die Ausgangsstellung zurück. Der Schwenkhebel 25' könnte auch manuell wieder in die Ausgangsstellung zurückgedreht werden.

Es versteht sich, dass durch die Form des Langlochs 81 die Bewegung der unteren Spannbacke 22 vorgegeben werden kann. Folglich kann in anderen erfindungsgemäßen Ausgestaltungen die Form des Langlochs 81 von der in Fig. 15 gezeigten Form abweichen. Insbesondere kann auf diese Weise die untere Spannbacke 22 unter der Wirkung des ersten Exzenternockens 85 zu einer beliebigen kombinierten Hebe- und Schwenkbewegung gezwungen werden, um in der am Ende dieser Bewegung erreichten Fixierstellung mit der oberen Klemmbacke 21 zusammenzuwirken.

Mittels eines erfindungsgemäßen Klemmhalters 11, 11' können Funktionsteile für Bearbeitungsmaschinen in einfacher und komfortabler Weise an einem zugehörigen Profilelement 17 befestigt und wieder von diesem gelöst werden. Ein umständliches Auffädeln des Klemmhalters 11, 11' vom Schienen-Ende her ist ebenso wenig erforderlich wie das mehrfache Umdrehen einer Klemmschraube.

### Bezugszeichenliste

- 11, 11': Klemmhalter
- 13: Grundkörper
- 15: Halteabschnitt
- 17: Profilelement
- 19: Klemmeinrichtung
- 21: Obere Klemmbacke
- 22: Untere Klemmbacke
- 23: Obere Klemmfläche
- 24: Untere Klemmfläche
- 25, 25': Schwenkhebel
- 27: Endstück
- 29: Verstärkungselement
- 31: Versteifungsteil
- 33: Ausnehmung
- 35: Schlitz
- 37: Plattenabschnitt
- 39: Lagerbuchse
- 40: Exzenterwelle
- 41: Basisachse
- 43: Lagerabschnitt
- 44: Exzenterachse
- 45: Torsionsfeder
- 47: Anschlagfläche
- 49: Fortsatz
- 50: Mitnehmereinrichtung
- 53: Begrenzungsfläche
- 61,62: Funktionsteil-Klemmbacke
- 65: Spannhebel
- 67: Profilelement
- 69: Federelement
- 70: Beaufschlagungsfläche
- 77: Anschlagelement
- 79: Stift
- 80: Lagerbolzen
- 81: Langloch
- 83: Längsführung
- 84: Verschieberichtung
- 85: erster Exzenternocken
- 86: zweiter Exzenternocken
- 88: Schwenkachse
- 89: Drehachse
- 90: Steuerwelle
- 91: Stützvorsprung
- 92: Arretierabschnitt
- 96: Nockenelement
- 97: Auskragung
- 99: Stirnfläche
- 105: Druckfeder
- 110: Gleitlager

## Patentansprüche

1. Klemmhalter (11, 11') zum bedarfsweisen Anbringen eines Funktionsteils an einer Bearbeitungsmaschine, mit einer Klemmeinrichtung (19) und einem Halteabschnitt (15), der zur Verbindung mit dem Funktionsteil ausgebildet oder fest mit diesem verbunden ist, wobei die Klemmeinrichtung (19) wenigstens zwei Klemmbacken (21, 22) umfasst, die jeweilige Klemmflächen (23, 24) für einen klemmenden Eingriff mit einem Profilelement (17) der Bearbeitungsmaschine aufweisen und mittels eines Betätigungselements (25, 25') relativ zueinander von einer Fixierstellung in Richtung einer Freigabestellung und/oder umgekehrt bewegbar sind,
und wobei die Klemmbacken (21, 22) relativ zueinander schwenkbar sind, **dadurch gekennzeichnet, dass**
wenigstens eine der Klemmbacken (22) mittels eines Lagerbolzens (80), der durch eine Längsführung (83) geführt ist, verschwenkbar und verschiebbar an einem Grundkörper (13) des Klemmhalters (11') gelagert ist.

2. Klemmhalter nach Anspruch 1,
**dadurch gekennzeichnet, dass**
das Betätigungselement (25, 25') für eine Ein-Finger-Betätigung oder für eine Ein-Hand-Betätigung ausgelegt ist, und/oder dass die Klemmbacken (21, 22) durch Drücken oder Schwenken des Betätigungselements (25, 25') bewegbar sind.

3. Klemmhalter nach einem der vorstehenden Ansprüche,
**dadurch gekennzeichnet, dass**
das Betätigungselement (25, 25') ein Schwenkhebel ist, der an einem Grundkörper (13) des Klemmhalters (11) gelagert ist.

4. Klemmhalter nach einem der vorstehenden Ansprüche,
**dadurch gekennzeichnet, dass**
die Klemmbacken (21, 22) klauenartig ausgebildet sind, und/oder dass die Klemmflächen (23, 24) der Klemmbacken (21, 22) zumindest im Wesentlichen eben sind, insbesondere wobei zwei einander gegenüberliegende Klemmflächen (23, 24) der Klemmbacken (21, 22) relativ zueinander geneigt sind, wenn sich die Klemmbacken (21, 22) in der Fixierstellung befinden.

5. Klemmhalter nach einem der vorstehenden Ansprüche,
**dadurch gekennzeichnet, dass**
wenigstens eine der Klemmbacken (21, 22) zumindest teilweise aus einem elastischen Material gefertigt ist, insbesondere wobei in das elastische Material wenigstens ein Verstärkungselement (29) mit verringerter Elastizität eingebettet ist.

6. Klemmhalter nach einem der vorstehenden Ansprüche,
**dadurch gekennzeichnet, dass**
die Klemmbacken (21, 22) durch eine Federeinrichtung (45, 105) in Richtung der Fixierstellung beaufschlagt sind, insbesondere wobei die Klemmbacken (21, 22) durch die Vorspannkraft der Federeinrichtung (45, 105) lediglich bis zu einer zwischen der Freigabestellung und der Fixierstellung befindlichen Vorfixierstellung in Anlage an das Profilelement (17) bewegbar sind, wobei durch Ausüben einer zusätzlichen Kraft auf das Betätigungselement (25, 25') ein Weiterbewegen der Klemmbacken (21, 22) von der Vorfixierstellung bis zur Fixierstellung möglich ist.

7. Klemmhalter nach einem der vorstehenden Ansprüche,
**dadurch gekennzeichnet, dass**
die verschwenkbar und verschiebbar gelagerte Klemmbacke (22) durch wenigstens einen Exzenternocken (85, 86) beaufschlagbar ist, der mittels des Betätigungselements (25') um eine Drehachse (89) drehbar ist, insbesondere wobei die Drehachse (89) quer zu einer, insbesondere durch einen Lagerbolzen (80) definierten, Schwenkachse (88) der Klemmbacke (22) verläuft.

8. Klemmhalter nach Anspruch 7,
**dadurch gekennzeichnet, dass**
die verschwenkbar und verschiebbar gelagerte Klemmbacke (22) durch wenigstens zwei unterschiedliche Exzenternocken (85, 86) beaufschlagbar ist, die mittels des Betätigungselements (25') gemeinsam um die Drehachse (89) drehbar sind.

9. Klemmhalter nach Anspruch 7 oder 8,
**dadurch gekennzeichnet, dass**
der wenigstens eine Exzenternocken (85, 86) mittels einer bezüglich der Drehachse (89) axial verschiebbaren Steuerwelle (90) am Grundkörper (13) gelagert ist, wobei die verschwenkbar und verschiebbar gelagerte Klemmbacke (22) durch die Steuerwelle (90) und/oder den wenigstens einen Exzenternocken (85, 86) beaufschlagbar ist, insbesondere wobei die axial verschiebbare Steuerwelle (90) durch eine Arretiereinrichtung (91, 92) in wenigstens einer axialen Stellung arretierbar ist.

10. Klemmhalter nach einem der vorstehenden Ansprüche,
**dadurch gekennzeichnet, dass**
der Halteabschnitt (15) für eine klemmende Verbindung mit dem Funktionsteil wenigstens zwei Funktionsteil-Klemmbacken (61, 62) umfasst, die mittels eines verschwenkbaren Spannhebels (65) relativ zueinander von einer Fixierstellung in Richtung einer Freigabestellung und/oder umgekehrt bewegbar sind, insbesondere wobei die Funktionsteil-Klemmbacken (61, 62) für einen Eingriff mit einem Schwalbenschwanzprofil (67) ausgebildet sind.

11. Klemmhalter nach Anspruch 10,
**dadurch gekennzeichnet, dass**
an dem verschwenkbaren Spannhebel (65) eine exzentrische Beaufschlagungsfläche (70) ausgebildet ist, welche für eine Beaufschlagung einer beweglich an einem Grundkörper (15) des Klemmhalters (11, 11') gelagerten Funktionsteil-Klemmbacke (62) vorgesehen ist.

12. Bearbeitungsmaschine, insbesondere Tischkreissäge, mit einem Profilelement (17), das einander gegenüberliegende Anlageflächen aufweist, und wenigstens einem Klemmhalter (11, 11') gemäß einem der vorstehenden Ansprüche, wobei die Klemmbacken (21, 22) in der Fixierstellung für einen klemmenden Eingriff mit den Anlageflächen des Profilelements (17) positioniert sind und in der Freigabestellung von dem Profilelement (17) abnehmbar sind, insbesondere wobei die Klemmbacken (21, 22) des Klemmhalters (11, 11') für ein zweiseitiges, insbesondere hinterschneidendes, Umgreifen des Profilelements (17) ausgebildet sind.

13. Bearbeitungsmaschine nach Anspruch 12,
**dadurch gekennzeichnet, dass**
die Klemmbacken (21, 22) in der Freigabestellung derart voneinander beabstandet sind, dass ein geradliniges Abnehmen und Aufsetzen des Klemmhalters (11, 11') vom Profilelement (17) in wenigstens einer Abnahme- bzw. Aufsetzrichtung ermöglicht ist, und/oder das Profilelement (17) an einer Seitenfläche, Frontfläche und/oder Rückfläche der Bearbeitungsmaschine horizontal verlaufend angeordnet ist und der Klemmhalter (11, 11') geradlinig, insbesondere schräg nach oben, von dem Profilelement (17) abnehmbar und auf das Profilelement (17) aufsetzbar ist, wenn sich die Klemmbacken (21, 22) in der Freigabestellung befinden.

## Claims

1. A clamping holder (11, 11') for attaching a functional part to a machine tool as required, said clamping holder (11, 11') comprising a clamping device (19) and a holding section (15) which is configured for connection to the functional part or which is fixedly connected thereto, wherein the clamping device (19) comprises at least two clamping jaws (21, 22) which have respective clamping surfaces (23, 24) for a clamping engagement with a profile element (17) of the machine tool and which are movable relative to one another by means of an actuation element (25, 25') from a fixing position in the direction of a release position and/or vice versa,
and wherein the clamping jaws (21, 22) are pivotable relative to one another,
**characterized in that**
at least one of the clamping jaws (22) is pivotably and displaceably supported at a base body (13) of the clamping holder (11') by means of a bearing pin (80) which is guided by a longitudinal guide (83).

2. A clamping holder in accordance with claim 1,
**characterized in that**
the actuation element (25, 25') is adapted for a one-finger actuation or for a one-hand actuation; and/or **in that** the clamping jaws (21, 22) can be moved by pressing or pivoting the actuation element (25, 25').

3. A clamping holder in accordance with one of the preceding claims,
**characterized in that**
the actuation element (25, 25') is a pivot lever which is supported at a base body (13) of the clamping holder (11).

4. A clamping holder in accordance with any one of the preceding claims,
**characterized in that**
the clamping jaws (21) are formed in the manner of a claw; and/or **in that** the clamping surfaces (23, 24) of the clamping jaws (21, 22) are at least substantially planar, in particular wherein two mutually oppositely disposed clamping surfaces (23, 24) of the clamping jaws (21, 22) are inclined relative to one another when the clamping jaws (21, 22) are in the fixing position.

5. A clamping holder in accordance with any one of the preceding claims,
**characterized in that**
at least one of the clamping jaws (21, 22) is at least partly produced from an elastic material, in particular wherein at least one reinforcement element (29) having a reduced elasticity is embedded in the elastic material.

6. A clamping holder in accordance with any one of the preceding claims,
**characterized in that**
the clamping jaws (21, 22) are acted on by a spring device (45, 105) in the direction of the fixing position, in particular with the clamping jaws (21, 22) being movable into contact with the profile element (17) by the preloading force of the spring device (45, 105) only up to a pre-fixing position located between the release position and the fixing position, with a further movement of the clamping jaws (21, 22) from the pre-fixing position up to the fixing position being possible by exerting an additional force on the actuation element (25, 25').

7. A clamping holder in accordance with any one of the preceding claims,
**characterized in that**
the pivotably and displaceably supported clamping jaw (22) can be acted on by at least one eccentric cam (85, 86) which can be rotated about an axis of rotation (89) by means of the actuation element (25'), in particular with the axis of rotation (89) extending transversely to a pivot axis (88) of the clamping jaw (22) which is in particular defined by a bearing pin (80).

8. A clamping holder in accordance with claim 7,
**characterized in that**
the pivotably and displaceably supported clamping jaw (22) can be acted on by at least two different eccentric cams (85, 86) which can be jointly rotated about the axis of rotation (89) by means of the actuation element (25').

9. A clamping holder in accordance with claim 7 or claim 8,
**characterized in that**
the at least one eccentric cam (85, 86) is supported at the base body (13) by means of a control shaft (90) axially displaceable with respect to the axis of rotation (89), with the pivotably and displaceably supported clamping jaw (22) being able to be acted on by the control shaft (90) and/or the at least one eccentric cam (85, 86), in particular with the axially displaceable control shaft (90) being lockable in at least one axial position by a locking device (91, 92).

10. A clamping holder in accordance with any one of the preceding claims,
**characterized in that**
the holding section (15) comprises, for a clamping connection with the functional part, at least two functional part clamping jaws (61, 62) which are movable relative to one another by means of a pivotable clamping lever (65) from a fixing position in the direction of a release position and/or vice versa, in particular with the functional part clamping jaws (61, 62) being configured for an engagement with a dovetail profile (67).

11. A clamping holder in accordance with claim 10,
**characterized in that**
an eccentric application surface (70) is formed at the pivotable clamping lever (65) and is provided for an action on a functional part clamping jaw (62) movably supported at a base body (15) of the clamping holder (11, 11').

12. A machine tool, in particular a circular table saw, comprising a profile element (17), which has mutually oppositely disposed contact surfaces, and at least one clamping holder (11, 11') in accordance with any one of the preceding claims, wherein the clamping jaws (21, 22) are positioned in the fixing position for a clamping engagement with the contact surfaces of the profile element (17) and are removable from the profile element (17) in the release position, in particular wherein the clamping jaws (21, 22) of the clamping holder (11, 11') are configured for a two-sided engagement around, in particular an undercutting engagement around, of the profile element (17).

13. A machine tool in accordance with claim 12,
**characterized in that**
the clamping jaws (21, 22) are spaced apart from one another in the release position such that a straight-line removal and placement of the clamping holder (11, 11') from or onto the profile element (17) is made possible in at least one removal direction or placement direction, and/or the profile element (17) is arranged extending in a horizontal manner at a side surface, a front surface and/or a rear surface of the machine tool and the clamping holder (11, 11') can be removed from the profile element (17) and placed onto the profile element (17) in a straight line, in particular obliquely upwardly, when the clamping jaws (21, 22) are in the release position.

## Revendications

1. Support de serrage (11, 11') destiné à poser si nécessaire une pièce fonctionnelle sur une machine d'usinage, avec un moyen de serrage (19) et une section de support (15) qui est réalisée pour être assemblée à la pièce fonctionnelle ou qui est assemblée de manière solidaire à celle-ci, dans lequel le moyen de serrage (19) comprend au moins deux mâchoires de serrage (21, 22) qui présentent des surfaces de serrage (23, 24) respectives pour un engagement de serrage avec un élément profilé (17) de la machine d'usinage et qui peuvent être déplacées l'une par rapport à l'autre au moyen d'un élément d'actionnement (25, 25') depuis une position de fixation en direction d'une position de libération et/ou vice versa,
et dans lequel les mâchoires de serrage (21, 22) peuvent être pivotées l'une par rapport à l'autre,
**caractérisé en ce que**
l'une au moins des mâchoires de serrage (22) peut être montée de manière pivotable et déplaçable sur un corps de base (13) du support de serrage (11') au moyen d'un boulon de palier (80) qui est guidé par un guidage longitudinal (83).

2. Support de serrage selon la revendication 1,
**caractérisé en ce que**
l'élément d'actionnement (25, 25') est conçu pour un actionnement à un doigt ou pour un actionnement à une main, et/ou **en ce que** les mâchoires de serrage (21, 22) peuvent être déplacées en appuyant sur l'élément d'actionnement (25, 25') ou en le faisant pivoter.

3. Support de serrage selon l'une quelconque des revendications précédentes,
**caractérisé en ce que**
l'élément d'actionnement (25, 25') est un levier pivotant qui est monté sur un corps de base (13) du support de serrage (11).

4. Support de serrage selon l'une quelconque des revendications précédentes,
**caractérisé en ce que**
les mâchoires de serrage (21, 22) sont réalisées en forme de griffes, et/ou **en ce que** les surfaces de serrage (23, 24) des mâchoires de serrage (21, 22) sont au moins sensiblement planes, en particulier dans lequel deux surfaces de serrage (23, 24), se trouvant en vis-à-vis, des mâchoires de serrage (21, 22) sont inclinées l'une par rapport à l'autre quand les mâchoires de serrage (21, 22) se trouvent dans la position de fixation.

5. Support de serrage selon l'une quelconque des revendications précédentes,
**caractérisé en ce que**
l'une au moins des mâchoires de serrage (21, 22) est fabriquée au moins en partie à partir d'un matériau élastique, en particulier dans lequel au moins un élément de renforcement (29) à élasticité réduite est niché dans le matériau élastique.

6. Support de serrage selon l'une quelconque des revendications précédentes,
**caractérisé en ce que**
les mâchoires de serrage (21, 22) sont sollicitées par un moyen à ressort (45, 105) en direction de la position de fixation, en particulier dans lequel les mâchoires de serrage (21, 22) peuvent être déplacées par une force de précontrainte du moyen à ressort (45, 105) uniquement jusqu'à une position de pré-fixation, qui se trouve entre la position de libération et la position de fixation, en appui sur l'élément profilé (17), dans lequel il est possible, en exerçant une force supplémentaire sur l'élément d'actionnement (25, 25'), de poursuivre un déplacement des mâchoires de serrage (21, 22) depuis la position de pré-fixation jusqu'à la position de fixation.

7. Support de serrage selon l'une quelconque des revendications précédentes,
**caractérisé en ce que**
la mâchoire de serrage (22) montée de manière pivotable et déplaçable peut être sollicitée par au moins une came excentrique (85, 86) qui peut être mise en rotation autour d'un axe de rotation (89) au moyen de l'élément d'actionnement (25'), en particulier dans lequel l'axe de rotation (89) s'étend perpendiculairement à un axe de pivotement (88), en particulier défini par un boulon de palier (80), de la mâchoire de serrage (22).

8. Support de serrage selon la revendication 7,
**caractérisé en ce que**
la mâchoire de serrage (22) montée de manière pivotable et déplaçable (22) peut être sollicitée par au moins deux cames excentriques (85, 86) différentes qui peuvent être mises en rotation conjointement autour de l'axe de rotation (89) au moyen de l'élément d'actionnement (25').

9. Support de serrage selon la revendication 7 ou 8,
**caractérisé en ce que**
ladite au moins une came excentrique (85, 86) est montée sur le corps de base (13) au moyen d'un arbre de commande (90) axialement déplaçable par rapport à l'axe de rotation (89), dans lequel la mâchoire de serrage (22) montée de manière pivotable et déplaçable peut être sollicitée par l'arbre de commande (90) et/ou ladite au moins une came excentrique (85, 86), en particulier dans lequel l'arbre de commande (90) axialement déplaçable peut être arrêté par un moyen d'arrêt (91, 92) dans au moins une position axiale.

10. Support de serrage selon l'une quelconque des revendications précédentes,
**caractérisé en ce que**
la section de support (15) comprend au moins deux mâchoires de serrage à pièce fonctionnelle (61, 62), pour un assemblage par serrage avec la pièce fonctionnelle, qui sont réalisées pour être déplacées l'une par rapport à l'autre au moyen d'un levier de blocage (65) pivotable depuis une position de fixation en direction d'une position de libération et/ou vice versa, en particulier dans lequel les mâchoires de serrage à pièce fonctionnelle (61, 62) sont réalisées pour un engagement avec un profilé en queue-d'aronde (67).

11. Support de serrage selon la revendication 10,
**caractérisé en ce que**
une surface de sollicitation excentrique (70) est réalisée au niveau du levier de blocage (65) pivotable, qui est prévue pour une sollicitation d'une mâchoire de serrage à pièce fonctionnelle (62) montée de manière mobile sur un corps de base (15) du support de serrage (11, 11').

12. Machine d'usinage, en particulier scie circulaire sur table, comportant un élément profilé (17) qui présente des surfaces d'appui en vis-à-vis, et au moins un support de serrage (11, 11') selon l'une quelconque des revendications précédentes, dans laquelle les mâchoires de serrage (21, 22) sont positionnées dans la position de fixation pour un engagement par serrage avec les surfaces d'appui de l'élément profilé (17) et peuvent être retirées de l'élément profilé (17) dans la position de libération, en particulier dans laquelle les mâchoires de serrage (21, 22) du support de serrage (11, 11') sont réalisées pour un enserrement des deux côtés, en particulier par contre-dépouille, de l'élément profilé (17).

13. Machine d'usinage selon la revendication 12,
**caractérisée en ce que**
les mâchoires de serrage (21, 22) sont espacées l'une de l'autre dans la position de libération de telle sorte qu'un retrait et une insertion rectilignes du support de serrage (11, 11') de l'élément profilé (17) sont rendus possibles dans au moins une direction de retrait ou une direction d'insertion, et/ou l'élément profilé (17) est agencé au niveau d'une surface latérale, d'une surface avant et/ou d'une surface arrière de la machine d'usinage de manière horizontale, et l'élément de support (11, 11') peut être retiré de l'élément profilé (17) et inséré sur l'élément profilé (17) de manière rectiligne, en particulier en oblique vers le haut, quand les mâchoires de serrage (21, 22) se trouvent dans la position de libération.
